# EUROPEAN PATENT SPECIFICATION

(11) **EP 2 551 003 B1**
(45) Date of publication and mention of the grant of the patent: **09.12.2015**
(21) Application number: 12189632.8
(22) Date of filing: 05.02.2008
(51) Int. Cl.: B01D 27/00, B01D 50/00, A62B 23/02, B01D 29/01, B01D 29/11, B01D 46/00, B01D 46/40

(54) **Manufacture of filtration elements**
Herstellung von Filtrierungselementen
Fabrication d'éléments de filtration

(30) Priority: 08.02.2007 US 888895 P; 07.11.2007 US 986206 P; 01.02.2008 US 24697
(43) Date of publication of application: 30.01.2013
(62) Divisional of application: 08729071.4
(73) Proprietor: Invengineering Enterprises, Llc, Tucson, AZ 85757 (US)
(72) Inventor: Kwok, Kleo, Tucson, AZ Arizona 85755 (US)
(74) Representative: Prinz & Partner mbB

(56) References cited:
- US-A- 5 711 877
- US-A1- 2004 245 191

## Description

### MANUFACTURE FILTRATION ELEMENTS

This invention relates to the manufacture of filters. The invention has particular utility with reference to the manufacture of reusable filter elements, and will be described in connection with such utility, although other utilities are contemplated.

There are many methods in existence to manufacture filtration elements for various applications. Examples include etched disc, pleated materials, mesh screen, folded paper, etc. The US 5,711,877 discloses, for example, a thin metal foil disc that has been provided with rectangular flow channels on either side via etching. The flow channels spiral out in opposite directions and create an opening at their point of intersection. This disc design can be used to create filter elements. The US 2004/0245191 A1 shows a hydrogen production filter that is manufactured using an etching technique. The surface of the filter is provided with a plurality of isolated cylindrical columns between which through holes are etched. The present invention provides improvement over such prior art methods.

In one aspect the present invention employs photochemical etching techniques to manufacture a basic filtration element, which can then be used as a basis for constructing various devices for different applications. In this process, sheets of etchable material are etched from one or both sides of that sheet to form channels in a premasked pattern, which controls the minimum opening of the filtration element. The desired channel opening is only limited by the capability of the photochemical etching system being used.

In another aspect the present invention provides a method for making a filter element by rolling or extruding a first sheet to form a plurality of recessed areas bordered by lands, selectively etching or punching through the recessed pattern areas, and bonding a second sheet having a plurality of etched or punched through areas to the first sheet, and, aligning the etched through areas to the second sheet with the recessed areas of the first sheet.

Other features and advantages of the present invention will be seen from the following detailed description, taken into conjunction with the accompanying drawings, wherein;

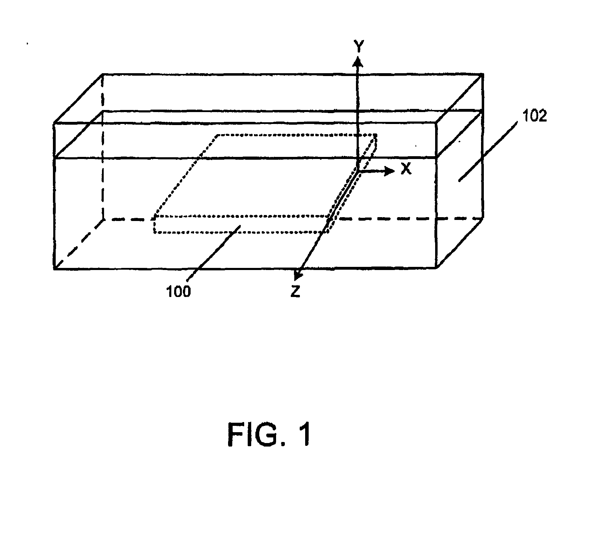

Fig. 1 grammatically illustrates an etching bath for forming a basic filtration element in accordance with the present invention;
Figs. 2 and 3 illustrate etching patterns for a filtration element made in accordance with the present invention;
Fig. 4, 4A and 4B illustrate one embodiment of a filter made in accordance with the present invention;
Fig. 5 illustrates how a filtration element made in accordance with the first embodiment of the present invention may be folded or pleated to increase the filtration area;
Fig. 6 shows how a filtration element made in accordance with the present invention may be wrapped to form a cylindrical filter element;
Fig. 7 shows how a basic filtering element of the present invention may be used to form a face mask,
Fig. 8 is a block flow diagram illustrating the process of a second embodiment of the present invention;
Fig. 9 is a side elevational view in cross section, illustrating the first step in the process of Fig. 8;
Fig. 10 is a side elevational view, in cross section, and Fig. 11 a top plan view, of an extruded sheet after etch through in a first etching step of the process of Fig. 8;
Fig. 12 is a side elevational view, in cross section, and Fig. 13 a top plan view, of a second sheet after etching in accordance with a second etching step of Fig. 8; and

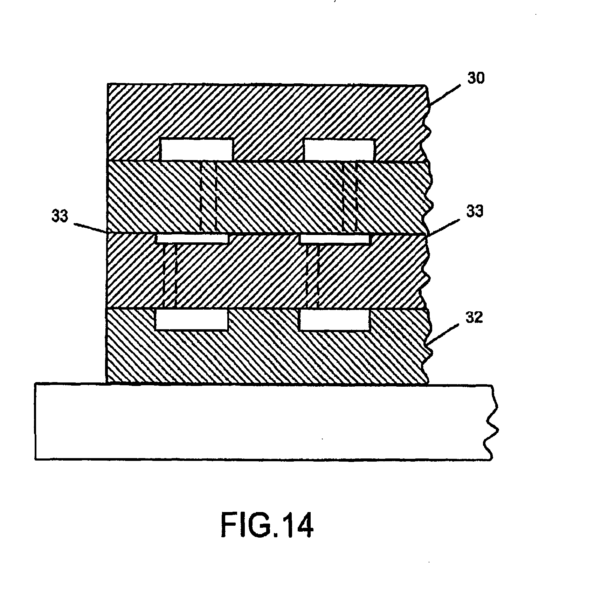

Fig. 14 is a side elevational view, in cross section, showing assembly of a plurality of sheets stacked to form a filter element in accordance with the second embodiment of the present invention.

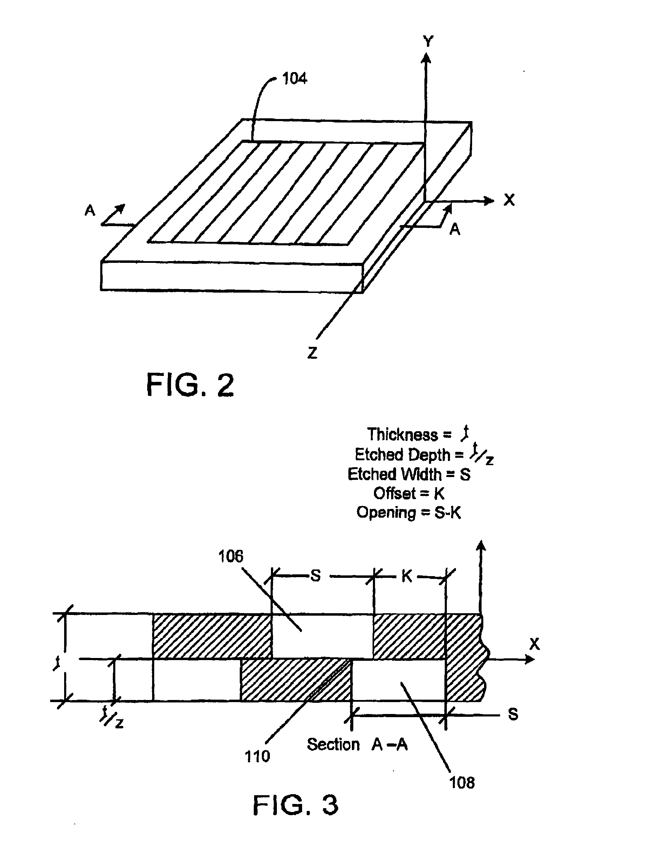

In one preferred embodiment of the invention, a metal sheet 100 is immersed in an etching bath 102, and relative movement is established between the sheet and the bath, e.g. by moving the sheet back and forth in the bath, for example, with X being the direction of the sheet movement in the etching bath and Y being the thickness direction, the sheet of material is masked 104 and etched in the Y direction as depicted in Fig. 2. Alternatively, the etch bath may be caused to flow over the sheet, or sprayed onto the sheet. The etch bath etches the sheet into etched patterned channels or openings 106, 108 (Fig. 3) to a depth which in a preferred embodiment of the invention is just past half of the sheet thickness, as measured from both sides of the sheet. The etched channels on one side are 106 offset from the etched channels 108 on other side so that when the sheet is etched from each side to a depth just past half the sheet thickness, the channels will meet with a predetermined width opening 110. An exemplary pattern and the opening width is shown in Figs. 2 and 3. The etched depth is controlled by the etchant flow, temperature, exposure time, etchant concentration, etc. This pattern is repeated in the X direction.

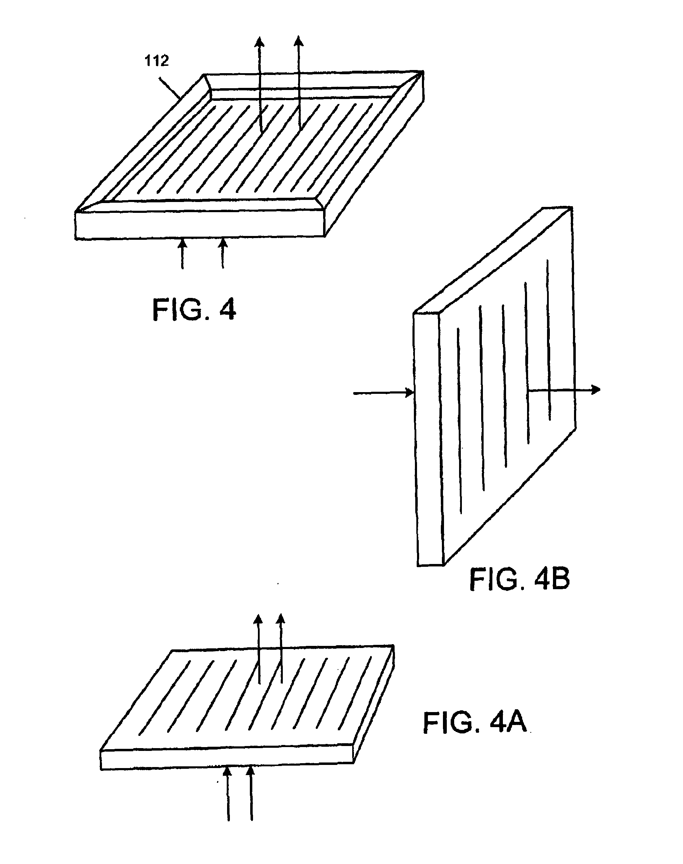

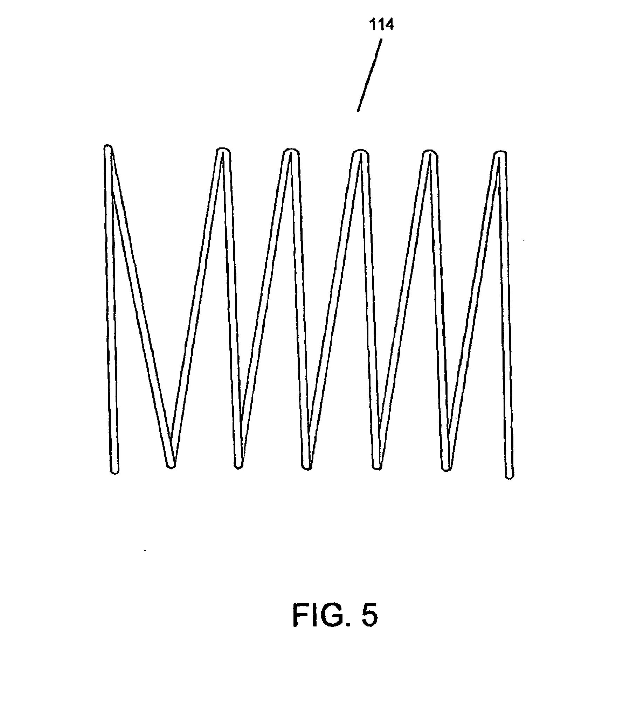

Once the basic filtration element in sheet form is obtained, further processing can be performed depending on the required application. For example, the etched sheet maybe cut into rectangular shape. With proper edge support 112 (see Fig. 4), it can be used as a filter as shown in Figs. 4A and 4B, with fluid flows in the direction normal to the plate of this filter. Such an arrangement can be used as an air filter, or a household screen. This rectangular geometry can be folded or pleated, e.g. as shown at 114 in Fig. 5 to increase the filtration area.

The filtration element also can be used as an environmental separator that allows gas, including air, to flow through but inhibits the passing of liquid, such as water due to capillary effects.

The filtration element also can be used as a filter for a HVAC. For example, by placing the filter horizontally in a ceiling vent, heat will escape through the ceiling due to convective air flow, thus lowering the temperature of the living space. And yet it will prevent dust particles that are larger than the largest opening of the filter from recirculating into the living space.

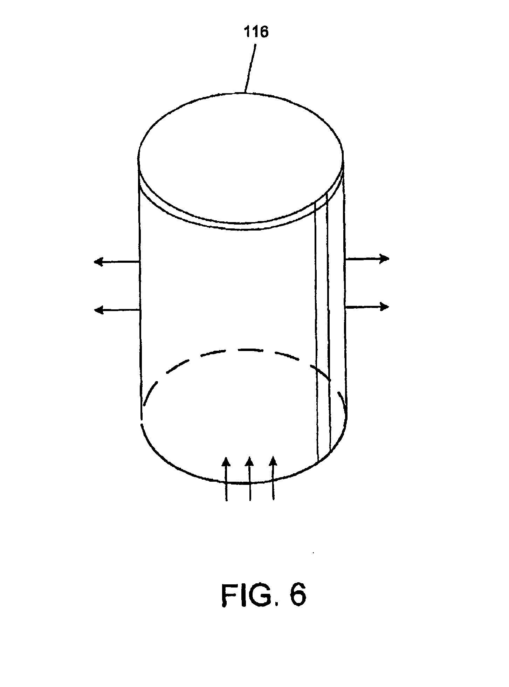

In another embodiment, shown in Fig. 6, the basic sheet can be cut into size, wrapped to form a cylinder, the two edges mated together, and one end of the cylinder capped at 116. The resulting structure can then be used as a cartridge filter. Fluid can flow from the open end through the etched channel openings and out radially as shown in Fig.6. Particles larger in size than the maximum opening will be captured by the filtration element and retained inside the filter. Applications include, but not limited to, oil, gas and chemical filtering. Furthermore, this cylindrical shape can be folded to increase the filtration area and hence its efficiency and useful life.

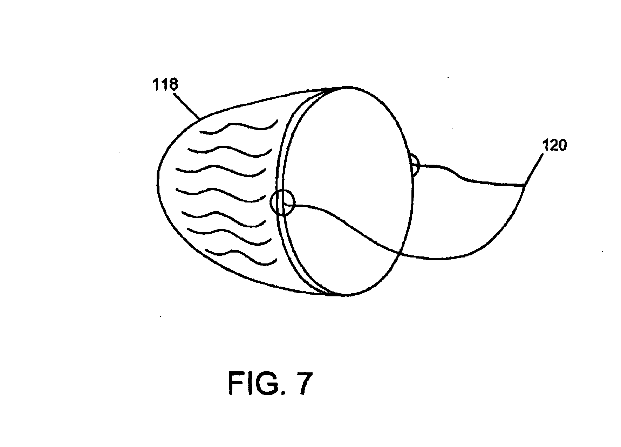

In another embodiment of the invention, the etched sheet can be formed into a face mask 118 by shaping the etched sheet into a semispherical or similar shape, as shown in Fig. 7. The edge of this semispherical shape can be bonded with flexible material (such as rubber or plastic), and a stretchable strap 120 attached to two side edges. Such a device can be used as a breathing apparatus by stretching the strap over the face of human or animal. The flexible edge conforms to the fact of the human or animal and acts as a sealing boundary to prevent particles larger than the maximum opening of the filtration element getting to the breathed air stream.

With the use of photochemical etching technique to make a filtration element, several benefits are realized.
1. The processed and fonned filters can be manufactured to a high precision with openings only limited by the capability of the etching system employed.
2. With the etching process, various materials are available depending on the application's requirements.
3. The filtration element can be cleaned depending on the application and become reusable, thus reducing environmental wastes and concerns.

While the above embodiment of the invention has been described in connection with certain preferred embodiments, various changes may be made in the invention without departing from the spirit and scope thereof. For example, while it is preferred to etch the filter element from both sides to a depth just past half of the thickness of the sheet, other relative depths are possible.

And, while it is preferred to etch similar patterns on sides of the filter element, for certain applications such as in a ceiling vent, it may be preferred to etch different size channels on the two sides.

If desired, various filter elements having different size channels may be stacked to form a filter that separates particles by size. Also, by controlling etching, it is possible to control the shape of the channels, e.g. so that they taper.

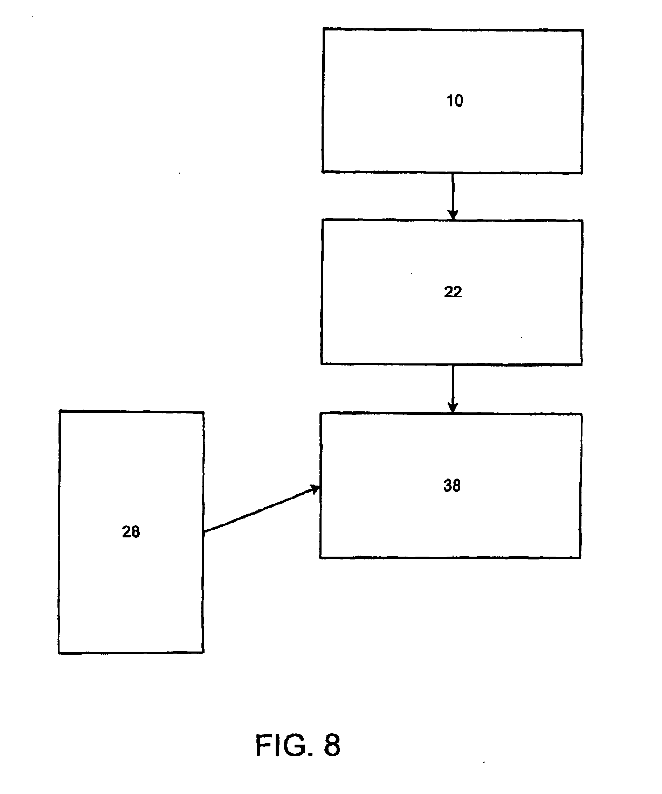

Referring to the Figs 8-9 another embodiment the present invention starts with a rolling or extrusion step 10 in which a first substrate, preferably a metal sheet 12 is extruded between a hard platen 14 and a roller 16. The sheets making up the filter element may comprise rigid or flexible materials. In a preferred embodiment, the filter material is formed from a rigid metal sheet.

Roller 16 has a plurality of lands 18 having a height or thickness T above valley areas 20. Lands 18 have a width W and are spaced from one another by a spacing S. Lands 18 may be formed by etching or machining away the surface of roller 16. Alternatively, lands 18 and valley areas 20 may be formed by an additive process using, for example, plasma spraying and HVOF coating. Roller 16 should be formed of a hard heat resistant material such as ceramic, hardened steel or titanium so as to permit extrusion of metal sheet 12 under high pressure and elevated temperature.

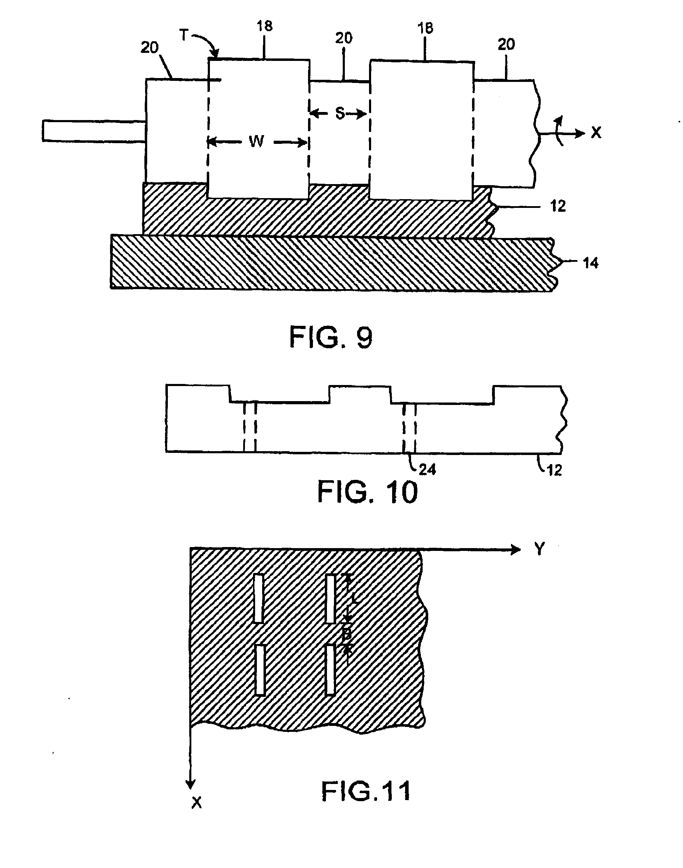

Referring to Figs. 10 and 11, the extruded sheet is then subjected to an etching step 22 to form a plurality of vias 24 through the valley areas 20 having a length L and width B in a repeated pattern.

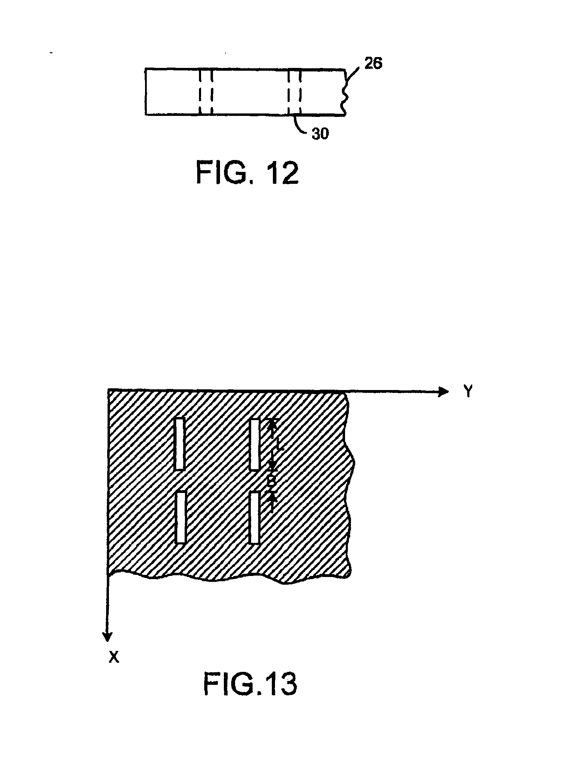

Referring also to Figs. 12 and 13, a second sheet 26 is subjected to a second etching step 28 to form a plurality of vias 30 preferably having similar length L and width B in a repeated pattern.

The contoured etched sheet 12 resulting from step 22 and the etched sheet 28 resulting from step 28 are then stacked between top and bottom loading plates 30, 32, respectively, and the sheets 12 and 26 are bonded to one another at bonding surfaces 33 in a pressing or laminated step 34.

The pressing or laminating step 34 will be dependent on several factors including:
(a) The materials used
(b) Applied temperature
(c) Applied loading force and its uniformity
(d) Preparation of material or materials to be bonded
(e) Controlled environment
(f) Duration of applied bonding conditions
(g) Mating geometry
(h) Thickness of material or materials

What results is a filter element, having a filtration size essentially determined by the land height T.

Various changes may be made in the above invention without departing from the spirit and scope. For example, rather than extruding or rolling sheet 12 to form lands and valleys, the valleys may be formed by a two step etching process wherein a series of valleys are formed in a first masked etching step, and then vias are formed through the valley regions in a second masked etching step.

Yet other possibilities are to use an additive step for forming the lands, for example, by bonding a series of strips of metal of thickness T to the metal substrate 12. Also, rather than etching, one can use a or to use a punch to punch holes through the valley areas. The holes may be punched or formed simultaneously with the extrusion or rolling step, or in a separate step.

The filter element may comprise a rigid or flexible material. In a preferred embodiment, the filter material is formed from a rigid metal sheet. By making the filter of a rigid metal sheet, the filter can be washed and reused. However, the filter does not have to be reused. Forming the filter of metal also makes the filter useful, for example, in high temperature conditions such as in an engine exhaust or cooking exhaust. In such environments, the filter element, after etching, may be coated with a catalyst material, e.g. for treating the exhaust. Thus, the addition to a use as a filter for particulate material, the filters made in accordance with the present invention also may be used, for example, for automotive or other combustion applications.

As will be appreciated, the present invention provides manufacturing of filters to a high precision with openings only limited by the capability of the etching system employed. Also, forming the filtration elements of metal provides a filtration element that can be cleaned and reused.

Various other changes may be made without departing from the spirit and scope of the invention. For example, the invention has been described as etching the elements from one side, it is possible to etch from both sides. Also, various filter elements having different size vias may be stacked to form a filter that separates particles by size. Also, by controlling etching, it is possible to control the shape of the vias.

## Claims

1. A method of forming a filter material in which a plurality of flow channels or vias (24) are formed through a sheet, comprising the steps of:
providing a contoured sheet material (12) having a plurality of land (18) and valley (20) areas formed by rolling or extrusion; and
forming a plurality of vias (24) through the valleys (20) in the metal sheet (12).

2. A method of claim 1, **characterized in that** the contoured sheet (12) is formed of a metal or ceramic material.

3. The method of claim 1 or claim 2, **characterized in that**, the vias (24) are formed by punching or by etching.

4. The method of claim 1, further **characterized by** including the step of providing a plurality of contoured edged sheets (12), and stacking the sheets together.

5. The method of claim 4, **characterized in that** the vias (24) are formed by etching, and including the step of masking the sheets prior to etching.

6. The method of claim 4, further **characterized by** bonding two or more of said sheets (12) to one another.

7. The method of claim 5, further **characterized in that** the sheets (12) are etched in a two-step etching process.

## Patentansprüche

1. Verfahren zur Bildung eines Filtermaterials, bei dem mehrere Strömungskanäle oder Durchgangslöcher (24) durch eine Platte hindurch gebildet werden, mit den Schritten, bei denen:
ein konturiertes Plattenmaterial (12) bereitgestellt wird, das mehrere Steg-(18) und Talbereiche (20) aufweist, die durch Walzen oder Strangpressen gebildet sind, und
mehrere Durchgangslöcher (24) durch die Täler (20) in der Metallplatte (12) hindurch gebildet werden.

2. Verfahren nach Anspruch 1, **dadurch gekennzeichnet, dass** die konturierte Platte (12) aus einem Metall oder keramischem Material gebildet ist.

3. Verfahren nach Anspruch 1 oder Anspruch 2, **dadurch gekennzeichnet, dass** die Durchgangslöcher (24) durch Stanzen oder durch Ätzen gebildet werden.

4. Verfahren nach Anspruch 1, ferner **dadurch gekennzeichnet, dass** der Schritt enthalten ist, bei dem mehrere konturierte, mit Kanten versehene Platten (12) bereitgestellt werden und die Platten zusammengestapelt werden.

5. Verfahren nach Anspruch 4, **dadurch gekennzeichnet, dass** die Durchgangslöcher (24) durch Ätzen gebildet werden, und mit dem Schritt, bei dem die Platten vor dem Ätzen maskiert werden.

6. Verfahren nach Anspruch 4, ferner **gekennzeichnet durch** haftendes Verbinden zweier oder mehrerer der Platten (12) miteinander.

7. Verfahren nach Anspruch 5, ferner **dadurch gekennzeichnet, dass** die Platten (12) in einem zweistufigen Ätzvorgang geätzt werden.

## Revendications

1. Procédé de réalisation d'un matériau filtrant dans lequel plusieurs canaux d'écoulement ou plusieurs trous de passage (24) sont réalisés à travers une plaque, comprenant les étapes suivantes, dans lesquelles :
il est prévu un matériau en plaque profilé (12) qui présente plusieurs zones de barrette (18) et de creux (20) réalisées par laminage ou par extrusion ; et
plusieurs trous de passage (24) sont réalisés à travers les creux (20) dans la plaque de métal (12).

2. Procédé selon la revendication 1, **caractérisé en ce que** la plaque profilée (12) est réalisée à partir d'un métal ou d'une matière céramique.

3. Procédé selon la revendication 1 ou la revendication 2, **caractérisé en ce que** les trous de passage (24) sont réalisés par poinçonnage ou par gravure.

4. Procédé selon la revendication 1, en outre **caractérisé en ce qu'**il inclut l'étape dans laquelle il est prévu plusieurs plaques profilées (12) pourvues d'arêtes et les plaques sont empilées ensemble.

5. Procédé selon la revendication 4, **caractérisé en ce que** les trous de passage (24) sont réalisés par gravure et **en ce qu'**il inclut l'étape dans laquelle les plaques sont masquées avant la gravure.

6. Procédé selon la revendication 4, en outre **caractérisé par** le collage de deux ou plusieurs desdites plaques (12) les unes aux autres.

7. Procédé selon la revendication 5, en outre **caractérisé en ce que** les plaques (12) sont gravées dans une procédure de gravure à deux étapes.
